# EUROPÄISCHE PATENTSCHRIFT

(11) **EP 2 116 122 B1**
(45) Veröffentlichungstag und Bekanntmachung des Hinweises auf die Patenterteilung: **24.08.2011**
(21) Anmeldenummer: 09004317.5
(22) Anmeldetag: 26.03.2009
(51) Int. Cl.: A01C 17/00, A01C 15/00

(54) **Scheibenstreuer**
Centrifugal spreader
Epandeur à disques

(30) Priorität: 08.05.2008 DE 102008022646
(43) Veröffentlichungstag der Anmeldung: 11.11.2009
(73) Patentinhaber: RAUCH LANDMASCHINENFABRIK GMBH, 76547 Sinzheim (DE)
(72) Erfinder: Doll, Franz, 76547 Sinzheim (DE); Gushurst, Hans, 76547 Sinzheim (DE)
(74) Vertreter: Lichti, Heiner

(56) Entgegenhaltungen:
- EP-A- 1 849 345
- DE-A1- 19 925 538
- DE-A1- 19 948 500
- US-A1- 2002 117 562

## Beschreibung

Die Erfindung betrifft einen Scheibenstreuer mit einem Rahmen und einem Streugut-Behälter, der wenigstens einen nach unten anschließenden pyramidenstumpfförmigen Trichter aufweist mit je einem Bodenteil am unteren Ende jedes Trichters und wenigstens einer Auslauföffnung in jedem Bodenteil und einer jeder Auslauföffnung zugeordneten Dosiereinrichtung, und mit je einer darunter angeordneten, rotierend angetriebenen Verteilerscheibe mit Wurfflügeln sowie einer die Umlaufbahn der Verteilerscheiben bzw. die äußeren Enden der Wurfflügel nach hinten bzw. nach beiden Seite überragenden Schutzeinrichtung gegen den Zugriff zu den rotierenden Verteilerscheiben von hinten und von der Seite.

Bei landwirtschaftlichen Maschinen, so auch bei Scheibenstreuern, werden immer höhere Anforderungen an die Bedienungssicherheit und die Vermeidung von Unfallrisiken gestellt. Dies gilt bei Scheibenstreuern insbesondere bezüglich der im Betrieb bei hoher Drehzahl umlaufenden Verteilerscheiben mit ihren Wurfschaufeln. Neben vielen anderen Schutzvorrichtungen erhöht es die Sicherheit beim Umgang mit einem Scheibendüngerstreuer, wenn man den versehentlichen Zugang oder Zugriff zu den rotierenden Streuscheiben erschwert. Andererseits müssen natürlich bei stillstehenden Streuscheiben alle Funktionen, wie Abdrehprobe, Scheibenwechsel und - falls erforderlich - auch Einstellungen an der Verteilerscheibe, z.B. bei verstellbaren Wurfflügeln, durchgeführt werden können. Es existieren spezifische Normen für Scheibendüngerstreuer, in denen für Schutzvorrichtungen Abstandsmaße zu den Enden Wurfflügel aufgeführt sind.

Als Schutzeinrichtung zur Vermeidung des unbeabsichtigten Zugriffs zu den rotierenden Streuscheiben dienen bisher Schutzbügel, die aus einem teuren Chrom-Nickel-Stahlrohr bestehen, um den unvermeidlichen Düngeranstrahlungen standzuhalten. Ein solcher Schutzbügel erstreckt sich mit seinen Schenkeln zu beiden Seiten des Scheibenstreuers und mit den die Schenkel verbindenden Bügelteil nach hinten bis über die Streuscheiben. Er ist entweder mit seinen beiden Schenkeln an der Rückwand des Behälters in deren oberen Teil befestigt (DE 10 2005 034 281 A1) oder mit den nach vorne (in Fahrtrichtung) gezogenen Schenkeln an vorderen Rahmenteilen des Scheibenstreuers befestigt (Prospekt der Anmelderin "RAUCH AXIS" Druckvermerk AXIS-03.2007/GR).

Bei einem Schutzbügel ist die Bedienungsperson verführt, auf den Schutzbügel unerlaubt aufzusteigen, um in den Behälter sehen zu können. Dabei ist die Gefahr des Abrutschens und Herunterfallens gegeben.

Ein Scheibenstreuer mit den Merkmalen des Oberbegriffs des Anspruchs 1 ist in der EP-A-1 849 345 beschrieben. Der pyramidenstumpfförmige Behälter ist von an dessen oberen Rand ansetzenden vertikalen Wandbereichen umgeben, die den Behälter aussteifen und verkleiden. Damit soll in erster Linie eine Vollkunststoff-Konstruktion möglich sein. Die vertikalen Wandbereiche reichen mit ihrer Unterkante bis etwa oberhalb der Verteilerscheiben und umgeben deren Umlaufbahn bzw. die der äußeren Enden der Wurfflügel mit Abstand. Auf diese Weise wird zugleich eine Schutzeinrichtung gegen den Zugriff von der Seite und von hinten zu den Wurfflügeln geschaffen.

Soweit es die Schutzfunktion betrifft, ist die bekannte Ausbildung sehr bauaufwändig und kostenträchtig.

Der Erfindung liegt die Aufgabe zugrunde, für einen Scheibenstreuer mit den Merkmalen des Oberbegriffs des Anspruchs 1 eine Schutzeinrichtung vorzuschlagen, die eine unbeabsichtigte Berührung der Verteilerscheiben erschwert und kostengünstig herstellbar ist.

Diese Aufgabe wird erfindungsgemäß dadurch gelöst, dass die Schutzeinrichtung eine nahe an die Rückwand des Trichters anschließende und sich entgegen der Fahrtrichtung nach hinten und unten geneigt erstreckende Schürze und sich seitlich etwa horizontal erstreckende, flächige Schutzabdeckungen aufweist.

Durch die die Verteilerscheiben bzw. die äußeren Enden der Wurfflügel nach hinten überragende Schürze bzw. die nach beiden Seiten überragenden sich seitlich erstreckenden Schutzabdeckungen wird ein Zugriff zu den rotierenden Verteilerscheiben und den Wurfflügeln von hinten und von der Seite wirksam behindert. Zwischen den vorgenannten Teilen der Schutzeinrichtung und dem Behälter sind keine Zwischenräume vorhanden. Dafür sorgt insbesondere auch die nahe an die Rückwand des Behälters anschließende nach hinten und unten geneigte Schürze, die zugleich ein Aufsteigen durch die Bedienungsperson verhindert, da sie hierfür keinen Halt bietet.

Vorzugsweise schließt die Schürze abstandslos an die Rückwand des Behälters an.

Weist der Scheibenstreuer einen Behälter mit zwei nebeneinander liegenden, pyramidenstumpfförmigen Trichtern und je einem an dessen unteren Ende angeordnetes Bodenteil auf, so ist jedem Trichter in dem die Sicherheit garantierenden Ausmaß eine Schürze und jeweils eine sich zur Seite erstreckende Schutzabdeckung zugeordnet.

Eine Ausführungsform der Erfindung zeichnet sich dadurch aus, dass die Schutzeinrichtung mit ihrer Schürze im Bereich des Behälters und mit ihren seitlichen, flächigen Schutzabdeckungen an beiderseits des Behälters nach hinten reichenden, parallelen Rahmenteilen, vorzugsweise von unten befestigt ist.

Damit ist der gesamte Umlaufbereich der Verteilerscheiben bzw. der Enden der Wurfflügel gegen Zugriff von oben und von der Seite her geschützt.

In einer bevorzugten Ausführungsform ist die Schutzeinrichtung als Kunststoff-Formteil ausgebildet, das zweckmäßigerweise zur Erhöhung der Stabilität stark verrippt ist. Ein solches Kunststoff-Formteil lässt sich in Serie preisgünstig herstellen und ist insbesondere preiswerter als ein Schutzbügel aus einem stabilen Chrom-Nickel-Stahlrohr, so dass insbesondere bei kleinen Streuern der Kostenanteil der Schutzeinrichtung weniger ins Gewicht fällt.

In einer vorteilhaften Ausführung ist vorgesehen, dass das Kunststoff-Formteil einen aus einem etwa horizontalen Abschnitt etwa parallel zur Rückwand des Behälters aufsteigenden Abschnitt aufweist, an den die nach hinten unten verlaufende Schürze anschließt. Dabei bildet die Schürze mit dem aufsteigenden Abschnitt im Querschnitt ein nach unten offenes Dreieck, das vorteilhafterweise durch Querrippen ausgesteift ist.

Gemäß einem Ausführungsbeispiel ist das Kunststoff-Formteil in der Längsmittelachse in zwei Bauteile geteilt, die jeweils für sich an der Rückwand des Behälters bzw. an den seitlichen Rahmenteilen befestigt sind.

Dadurch lässt sich die Stabilität jedes einzelnen Bauteils erhöhen und die Montage vereinfachen.

Es sind Scheibenstreuer mit einem das Abstrahlen von Düngerpartikeln durch die Verteilerscheiben nach vorne und seitlich auf den Rahmen und dessen Teilen verhindernden Scheibenschutz bekannt (DE 197 33 549 A1), wobei der Scheibenschutz die Verteilerscheiben jeweils auf etwa der Hälfte ihres Umfangs umhüllt. Hierauf aufbauend ist gemäß einer bevorzugten Ausführungsform der Erfindung vorgesehen, dass die Schutzeinrichtung mit dem Scheibenschutz verbindbar ist, so dass ein wirksamer Schutz sowohl der Rahmenteile, als auch ein sicherheitstechnischer Schutz gegen den Zugriff zu den rotierenden Verteilerscheiben gebildet ist.

Bei einer solchen Ausführungsform ist auch der Scheibenschutz als Kunststoff-Formteil ausgebildet und ist das die Schutzeinrichtung bildende Kunststoff-Formteil bzw. sind die beiden es bildenden Bauteile mit ihrem jeweils horizontalen Abschnitt mit einem entsprechenden horizontalen Abschnitt des Scheibenschutzes verbindbar, vorzugsweise zusammensteckbar..Schutzeinrichtung und Scheibenschutz bilden also im zusammengesteckten Zustand eine integrierte Schutzvorrichtung.

In kunststofftechnischer Hinsicht ist die Schutzeinrichtung vornehmlich auf Stabilität und der Scheibenschutz vornehmlich auf Verschleißfestigkeit gegen das abrasive Streugut ausgelegt.

Nachstehend ist die Erfindung anhand von in der Zeichnung wiedergegebenen Ausführungsbeispielen beschrieben. In der Zeichnung zeigen:
- Fig. 1: einen Zweischeibenstreuer in einer Ansicht von hinten;
- Fig. 2: den Zweischeibenstreuer gemäß Fig. 1 in einer Seitenansicht;
- Fig. 3: eine perspektivische Ansicht von oben auf Teile des Rahmens des Zweischeibenstreuers und die Schutzeinrichtung ohne den Streugut-Behälter;
- Fig. 4: eine perspektivische Ansicht von oben auf die Schutzeinrichtung und einen mit ihr verbindbaren Scheibenschutz;
- Fig. 5: die Bauteile gemäß Fig. 4 nach ihrer Verbindung.

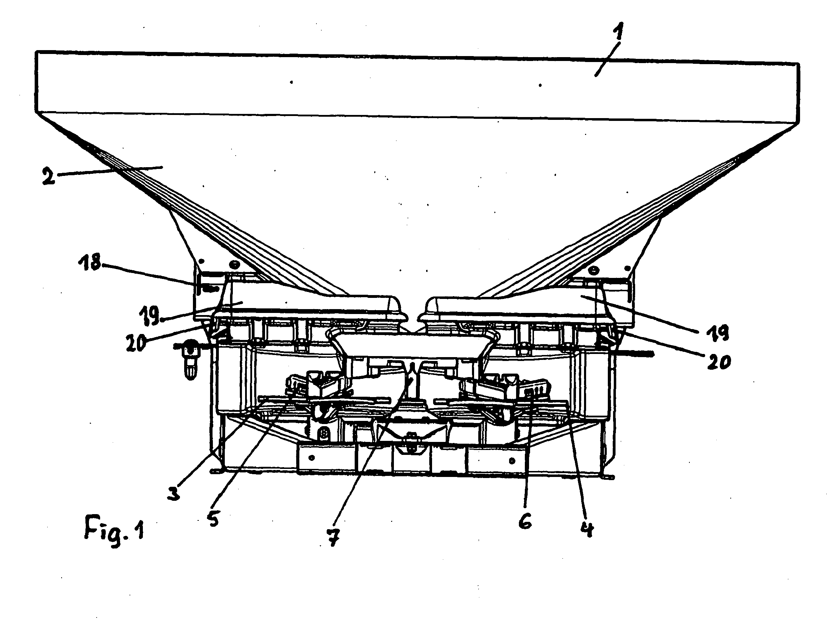

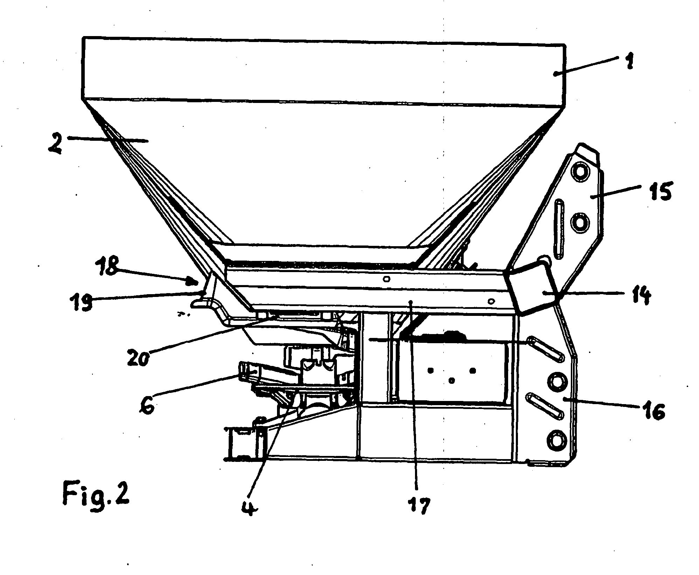

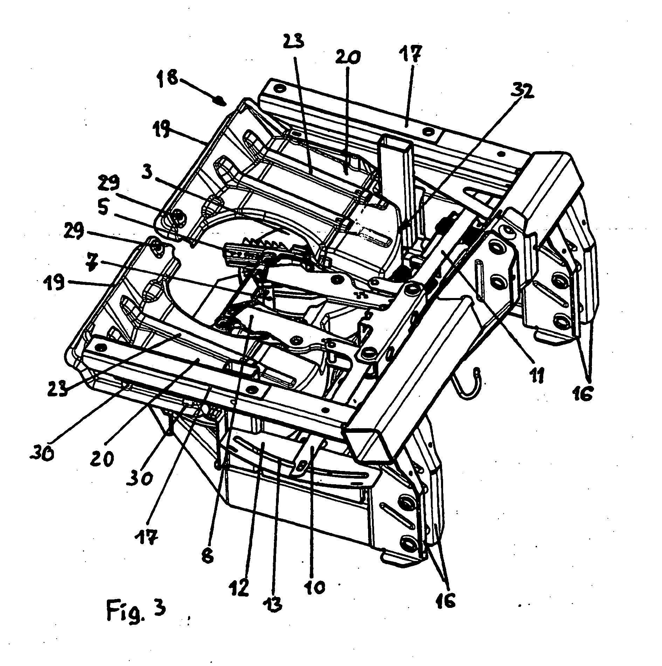

Der Streuer gemäß Fig. 1 und 2 weist einen Streugutbehälter 1 mit einem sich pyramidenstumpfförmig verjüngenden Trichter 2 auf, der am unteren Ende ein Bodenteil (nicht gezeigt) mit zwei Auslauföffnungen und je einer Dosiereinrichtung für jede Auslauföffnung aufweist, der jeweils darunter eine Verteilerscheibe 3, 4 mit Wurfflügeln 5 bzw. 6 zugeordnet ist. Die Verteilerscheiben 3, 4 werden beispielsweise über ein Längsgetriebe angetrieben, von dem mittig eine Rührwerkswelle 7 abgeleitet ist, die in den Behälter hineingeführt ist. Die Dosiereinrichtung ist in Fig. 3 erkennbar. Sie besteht aus je einem jeder Auslauföffnung zugeordneten Dosierschieber 8 bzw. 9, die über ein Gestänge 10 bzw. 11 von der Seite her betätigt werden. Die Einstellung der Dosiermenge erfolgt über eine an einem Bedienungspanel 12 angeordnete Skala 13.

Der Streuer weist einen mehrteiligen Rahmen auf, von dem in Fig. 2 ein Querholm 14 und ein daran ansetzendes oberes Rahmenteil 15 mit Anschlüssen für den Oberlenker und zwei in Fig. 2 hintereinander angeordnete untere Rahmenteile 16 mit den Anschlüssen für die Unterlenker eines Dreipunkthebers des Traktors gezeigt sind. Ferner weist der Rahmen - soweit in Verbindung mit der Erfindung maßgeblich - zwei parallel nach hinten reichende Rahmenteile 17 auf, die beiderseits des Trichters 2 des Streugut-Behälters 1 verlaufen.

Die Verteilerscheiben 3, 4 mit den Wurfflügeln 5, 6 werden durch eine Schutzeinrichtung 18 überragt, um den Zugriff von oben und von der Seite zu den rotierenden Verteilerscheiben zu verhindern. Die Schutzeinrichtung 18 besteht aus einem Kunststoff-Formteil mit einer an die Rückwand des Trichters 2 des Behälters 1 abstandslos anschließenden, nach hinten und unten geneigten Schürze 19 und sich zu beiden Seiten erstreckenden Schutzabdeckungen 20. Die Schürze 19 überragt die Verteilerscheiben nach hinten, während die Schutzabdeckungen 20 die Verteilerscheiben seitlich überragen.

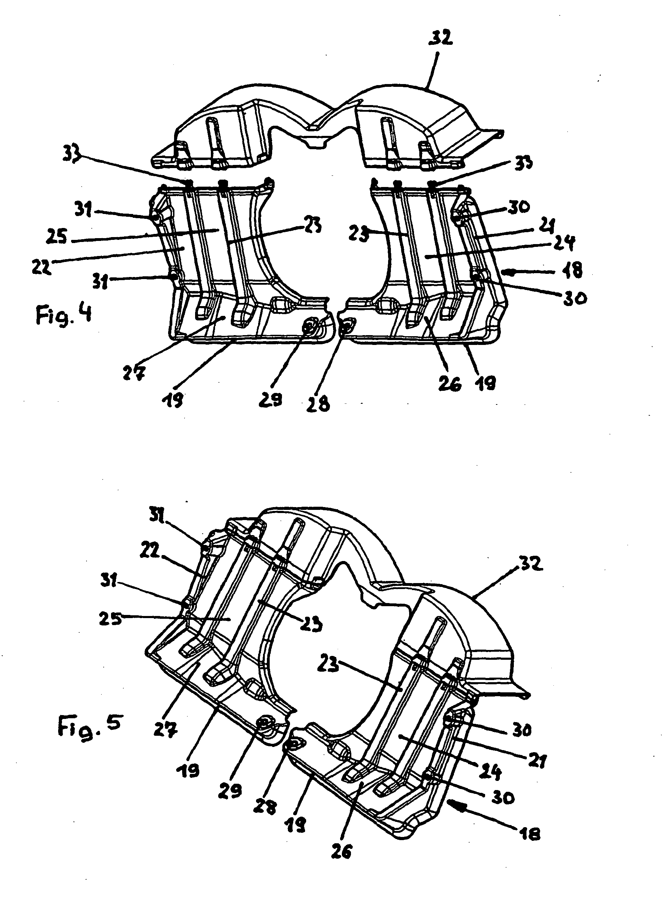

Beim gezeigten Ausführungsbeispiel (Fig. 3 bis 5) besteht das die Schutzeinrichtung 18 bildende Kunststoff-Formteil aus zwei in der Längsmittelachse getrennten Bauteilen 21, 22, die zur Erhöhung der Stabilität mit Rippen 23 versehen sind.

Jedes Bauteil weist einen im Wesentlichen horizontalen oberhalb der Verteilerscheiben 3, 4 angeordneten Abschnitt 24, 25 und einen schräg nach hinten oben ansteigenden Abschnitt 26, 27 auf, der etwa parallel zur Rückwand des Trichters 2 verläuft und über Ausformungen 28, 29 mit die Trichterwand durchgreifenden Befestigungsmitteln an dieser befestigt ist. An die nach oben ansteigenden Abschnitte 26, 27 schließt sich die nach hinten geneigte Schürze 19 an, wobei zwischen diesen ein etwa dreieckförmiger Querschnitt gebildet wird, der durch nicht gezeigte Rippen ausgesteift ist. Die im äußeren Bereich die Schutzabdeckung 20 bildenden etwa horizontalen Abschnitte 24, 25 sind über Ausformungen 30, 31 von unten an den sich nach hinten erstreckenden Rahmenteilen 17 befestigt.

Bei der gezeigten Ausführungsform ist den Verteilerscheiben 3, 4 ein Scheibenschutz 32 zugeordnet, der das Anstrahlen der Rahmenteile des Steuers verhindert. Er umgibt die Verteilerscheiben nach vorne und im Zwischenraum zwischen den Verteilerscheiben. Der Scheibenschutz 32 besteht gleichfalls aus einem verrippten Kunststoff-Formteil. Das die Schutzeinrichtung 18 bildende Kunststoff-Formteil bzw. die beiden sie bildenden Bauteile werden vor ihrer Befestigung an der Trichterwand und den seitlichen Rahmenteilen 17 mit dem Scheibenschutz 32 über Zapfen 33 formschlüssig zusammengesteckt. Der Kunststoff für den Scheibenschutz wird vornehmlich unter verschleißtechnischen Aspekten, derjenige für die Schutzeinrichtung 18 vornehmlich unter stabilitätstechnischen Aspekten ausgewählt

### Bezugszeichenliste

- 1: Behälter
- 2: Trichter
- 3: Verteilerscheibe
- 4: Verteilerscheibe
- 5: Wurfflügel
- 6: Wurfflügel
- 7: Rührwerkswelle
- 8: Dosierschieber
- 9: Dosierschieber
- 10: Gestänge
- 11: Gestänge
- 12: Bedienpanel
- 13: Skala
- 14: Querholm
- 15: Rahmenteil
- 16: Rahmenteil
- 17: Rahmenteil
- 18: Schutzeinrichtung
- 19: Schürze
- 20: Schutzabdeckungen
- 21: Bauteil
- 22: Bauteil
- 23: Rippen
- 24: horiz. Abschnitt
- 25: horiz. Abschnitt
- 26: ansteigender Abschnitt
- 27: ansteigender Abschnitt
- 28: Ausformung
- 29: Ausformung
- 30: Ausformungen
- 31: Ausformungen
- 32: Scheibenschutz
- 33: Zapfen

## Patentansprüche

1. Scheibenstreuer mit einem Rahmen und einem StreugutBehälter (1), der wenigstens einen nach unten anschließenden pyramidenstumpfförmigen Trichter (2) ufweist, mit je einem Bodenteil am unteren Ende jedes Trichters (2) und wenigstens einer Auslauföffnung in jedem Bodenteil und einer jeder Auslauföffnung zugeordneten Dosiereinrichtung, und mit je einer darunter angeordneten, rotierend angetriebenen Verteilerscheibe (3,4) mit Wurfflügeln (5,6) sowie einer die Umlaufbahn der Verteilerscheiben (3, 4) bzw. die äußeren Enden der Wurfflügel (5, 6) nach hinten bzw. nach beiden Seiten überragenden Schutzeinrichtung gegen den Zugriff zu den rotierenden Verteilerscheiben von hinten und von der Seite, **dadurch gekennzeichnet, dass** die Schutzeinrichtung (18) eine nahe an die Rückwand des Trichters (2) anschließende und sich entgegen der Fahrtrichtung nach hinten und unten geneigt erstreckende Schürze (19) und sich seitlich etwa horizontal erstreckende, flächige Schutzabdeckungen (20) aufweist.

2. Scheibenstreuer nach Anspruch 1, **dadurch gekennzeichnet, dass** die Schürze (19) abstandslos an die Rückwand des Trichters (2) anschließt.

3. Scheibenstreuer nach Anspruch 1 oder 2, **dadurch gekennzeichnet, dass** die Schutzeinrichtung (18) mit ihrer Schürze (19) im Bereich des Trichters (2) und mit ihren seitlichen, flächigen Schutzabdeckungen (20) an beiderseits des Behälters nach hinten reichenden, parallelen Rahmenteilen (17) befestigt ist.

4. Scheibenstreuer nach einem der Ansprüche 1 bis 3, **dadurch gekennzeichnet, dass** die seitlichen, flächigen Schutzabdeckungen (20) von unten an den Rahmenteilen (17) befestigt sind.

5. Scheibenstreuer nach einem der Ansprüche 1 bis 4, **dadurch gekennzeichnet, dass** die Schutzeinrichtung (18) als Kunststoff-Formteil ausgebildet ist.

6. Scheibenstreuer nach einem der Ansprüche 1 bis 5, **dadurch gekennzeichnet, dass** das Kunststoff-Formteil stark verrippt ist.

7. Scheibenstreuer nach einem der Ansprüche 1 bis 6, **dadurch gekennzeichnet, dass** das Kunststoff-Formteil aus einem etwa horizontalen Abschnitt (24, 25) und einem etwa parallel zur Rückwand des Trichters (2) aufsteigenden Abschnitt (26, 27) besteht, an den die nach hinten unten verlaufende Schürze (19) anschließt.

8. Scheibenstreuer nach einem der Ansprüche 1 bis 7, **dadurch gekennzeichnet, dass** die Schürze (19) mit dem aufsteigenden Abschnitt (26, 27) im Querschnitt ein nach unten offenes Dreieck bildet.

9. Scheibenstreuer nach einem der Ansprüche 1 bis 6, **dadurch gekennzeichnet, dass** das Kunststoff-Formteil in der Längsmittelachse in zwei Bauteile geteilt ist, die jeweils für sich an der Rückwand des Trichters (2) bzw. an den seitlichen Rahmenteilen (17) befestigt sind.

10. Scheibenstreuer nach einem der Ansprüche 1 bis 9 mit einem das Abstrahlen von Düngerpartikeln durch die Verteilerscheiben (3, 4) nach vorne und seitlich auf den Rahmen und dessen Teilen verhindernden Scheibenschutz (32), **dadurch gekennzeichnet, dass** die Schutzeinrichtung (18) mit dem Scheibenschutz (32) verbindbar ist.

11. Scheibenstreuer nach einem der Ansprüche 1 bis 10, **dadurch gekennzeichnet, dass** der Scheibenschutz (32) als Kunststoff-Formteil ausgebildet ist und das die Schutzeinrichtung (18) bildende Kunststoff-Formteil bzw. die beiden es bildenden Bauteile mit ihrem jeweils etwa horizontalen Abschnitt (24, 25) mit entsprechenden horizontalen Abschnitten des Scheibenschutzes (32) verbindbar sind.

12. Scheibenstreuer nach einem der Ansprüche 1 bis 11, **dadurch gekennzeichnet, dass** das Kunststoff-Formteil der Schutzeinrichtung (19) bzw. die beiden es bildenden Bauteile und der Scheibenschutz (32) zusammengesteckt sind.

13. Scheibenstreuer nach einem der Ansprüche 1 bis 12, **dadurch gekennzeichnet, dass** der Kunststoff der Schutzeinrichtung (18) vornehmlich auf Stabilität und der Kunststoff des Scheibenschutzes (32) vornehmlich auf Verschleißfestigkeit ausgelegt ist.

## Claims

1. A disc spreader with a frame and a grit container (1) which has at least one downwardly connecting frustopyramidal hopper (12), each with a bottom section at the lower end of each hopper (2), and with at least one outlet opening in each bottom section and a dosing device assigned to each outlet opening, and each with a rotarily driven distributor disc (3, 4), arranged below the dosing device, with throwing blades (5, 6), and with a device protecting against access to the rotating distributor discs from behind and from the side, which device projects from the circumferential path of the distributor discs (3, 4) and the outer ends of the throwing blades (5, 6) rearwards and on both sides, respectively, **characterised in that** the protective device (18) has a skirt (19) connecting close to the rear wall of the hopper (2) and extending against the direction of travel, being inclined to the rear and downwards, and flat protective covers (20) extending laterally and roughly horizontally.

2. The disc spreader according to Claim 1, **characterised in that** the skirt (19) connects without a gap to the rear wall of the hopper (2).

3. The disc spreader according to Claim 1 or 2, **characterised in that** the protective device (18) is fastened with its skirt (19) in the region of the hopper (2) and with its lateral, flat protective covers (20) to parallel frame sections (17) extending to the rear on both sides of the container.

4. The disc spreader according to any one of Claims 1 to 3, **characterised in that** the lateral, flat protective covers (20) are fastened at the bottom to the frame sections (17).

5. The disc spreader according to any one of Claims 1 to 4, **characterised in that** the protective device (18) is designed as a plastic moulding.

6. The disc spreader according to any one of Claims 1 to 5, **characterised in that** the plastic moulding is substantially ribbed.

7. The disc spreader according to any one of Claims 1 to 6, **characterised in that** the plastic moulding has a section (26, 27) rising from an approximately horizontally section (24, 25) into one that runs approximately parallel with the rear wall of the hopper (2), to which section the skirt (19) running downwards to the rear is connected.

8. The disc spreader according to any one of Claims 1 to 7, **characterised in that** the skirt (19) forms in cross-section a triangle open at the bottom with the rising section (26, 27).

9. The disc spreader according to any one of Claims 1 to 6, **characterised in that** the plastic moulding is divided, in the longitudinal central axis, into two components each of which is fastened to the rear wall of the hopper (2) and to the lateral frame sections (17).

10. The disc spreader according to any one of Claims 1 to 9, with a disc guard (32) preventing the radiation of fertiliser particles through the distributor discs (3, 4) in the forward direction and laterally onto the frame and its parts, **characterised in that** the protective device (18) can be connected to the disc guard (32).

11. The disc spreader according to any one of Claims 1 to 10, **characterised in that** the disc guard (32) is designed as a plastic moulding, and **in that** the plastic moulding forming the protective device (18) and the two components forming it can each be connected with its approximately horizontal section (24, 25) to corresponding sections of the disc guard (32).

12. The disc spreader according to any one of Claims 1 to 11, **characterised in that** the plastic moulding of the protective device (19), the two components forming it and the disc guard (32) are plugged together.

13. The disc spreader according to any one of Claims 1 to 12, **characterised in that** the plastic in the protective device (18) is designed primarily on the basis of stability and **in that** the plastic in the disc guard (32) is designed primarily on the basis of wear resistance.

## Revendications

1. Épandeur à disques avec un châssis et un réservoir de produit à épandre (1) qui comporte au moins un entonnoir (2) en forme de tronc pyramidal raccordé vers le bas, avec respectivement une partie de fond située au niveau de l'extrémité inférieure de chaque entonnoir (2) et au moins une ouverture d'écoulement positionnée dans chaque partie de fond et un dispositif de dosage associé à chaque ouverture d'écoulement, et avec respectivement un disque de répartition (3, 4) équipé d'ailettes de projection (5, 6) disposé en dessous et entraîné en rotation ainsi qu'avec un dispositif de protection surplombant l'orbite des disques de répartition (3, 4) et/ou les extrémités extérieures des ailettes de projection (5, 6) vers l'arrière et/ou vers les deux côtés pour empêcher d'accéder, depuis derrière et les côtés, aux disques de répartition tournants, **caractérisé en ce que** le dispositif de protection (18) comporte un tablier (19) raccordé à proximité de la paroi arrière de l'entonnoir (2) et s'étendant de façon inclinée vers l'arrière et vers le bas, dans la direction contraire à la direction de marche, ainsi que des caches de protection (20) plats s'étendant approximativement horizontalement en côté.

2. Épandeur à disques selon la revendication 1, **caractérisé en ce que** le tablier (19) est raccordé, sans aucun espace intercalé, à la paroi arrière de l'entonnoir (2).

3. Épandeur à disques selon la revendication 1 ou 2, **caractérisé en ce que** le dispositif de protection (18) est fixé avec son tablier (19) dans la zone de l'entonnoir (2) et avec ses caches de protection (20) latéraux plats aux parties de châssis (17) parallèles orientées vers l'arrière au niveau des deux côtés du réservoir.

4. Épandeur à disques selon l'une quelconque des revendications 1 à 3, **caractérisé en ce que** les caches de protection (20) plats latéraux sont fixés par en bas aux parties de châssis (17).

5. Épandeur à disques selon l'une quelconque des revendications 1 à 4, **caractérisé en ce que** le dispositif de protection (18) prend la forme d'une pièce moulée en plastique.

6. Épandeur à disques selon l'une quelconque des revendications 1 à 5, **caractérisé en ce que** la pièce moulée en plastique présente un nervurage important.

7. Épandeur à disques selon l'une quelconque des revendications 1 à 6, **caractérisé en ce que** la pièce moulée en plastique se compose d'un segment (24, 25) quelque peu horizontal et d'un segment (26, 27) ressortant quelque peu parallèlement par rapport à la paroi arrière de l'entonnoir (2) et auquel le tablier (19) s'étendant vers l'arrière et vers le bas est raccordé.

8. Épandeur à disques selon l'une quelconque des revendications 1 à 7, **caractérisé en ce que** le tablier (19) forme, avec le segment (26, 27) montant, un triangle ouvert vers le bas, en section transversale.

9. Épandeur à disques selon l'une quelconque des revendications 1 à 6, **caractérisé en ce que** la pièce moulée en plastique est divisée, dans l'axe central longitudinal, en deux éléments respectivement fixés à la paroi arrière de l'entonnoir (2) et/ou aux parties de châssis (17) latérales.

10. Épandeur à disques selon l'une quelconque des revendications 1 à 9, avec un protège-disques (32) empêchant l'expulsion de particules d'engrais à travers les disques de répartition (3, 4), vers l'avant et en côté, sur le châssis et ses parties, **caractérisé en ce que** le dispositif de protection (18) peut être relié au protège-disques (32).

11. Épandeur à disques selon l'une quelconque des revendications 1 à 10, **caractérisé en ce que** le protège-disques (32) prend la forme d'une pièce moulée en plastique et que la pièce moulée en plastique formant le dispositif de protection (18) et/ou les deux éléments le constituant peuvent être reliés, à l'aide de leur segment (24, 25) respectivement approximativement horizontal, aux segments horizontaux correspondants du protège-disques (32).

12. Épandeur à disques selon l'une quelconque des revendications 1 à 11, **caractérisé en ce que** la pièce moulée en plastique du dispositif de protection (19) et/ou les deux composants le constituant et le protège-disques (32) sont assemblés.

13. Épandeur à disques selon l'une quelconque des revendications 1 à 12, **caractérisé en ce que** le plastique du dispositif de protection (18) est axé avant tout sur la stabilité et que le plastique du protège-disques (32) est axé avant tout sur la résistance à l'usure.
